# EUROPÄISCHE PATENTSCHRIFT

(11) **EP 4 061 648 B1**
(45) Veröffentlichungstag und Bekanntmachung des Hinweises auf die Patenterteilung: **06.03.2024**
(21) Anmeldenummer: 20792366.5
(22) Anmeldetag: 13.10.2020
(51) Int. Cl.: B60C 13/00, B60C 13/02, B60C 11/01

(54) **NUTZFAHRZEUGREIFEN**
UTILITY VEHICLE TYRE
BANDAGE DE VÉHICULE UTILITAIRE

(30) Priorität: 19.11.2019 DE 102019217828
(43) Veröffentlichungstag der Anmeldung: 28.09.2022
(73) Patentinhaber: Continental Reifen Deutschland GmbH, 30165 Hannover (DE)
(72) Erfinder: ROTHER, Helge, 30165 Hannover (DE); KRISTEN, Florian, 30165 Hannover (DE); SCHWENKE, Andreas, 30165 Hannover (DE); YEO, Chun Yi, 30165 Hannover (DE)
(74) Vertreter: Continental Corporation
(86) Internationale Anmeldenummer: PCT/EP2020/078737
(87) Internationale Veröffentlichungsnummer: WO 2021/099030

(56) Entgegenhaltungen:
- EP-A1- 3 219 516
- EP-A1- 3 533 639
- JP-A- 2000 280 711
- JP-A- 2004 291 937
- US-A1- 2017 174 007
- US-A1- 2018 065 422
- US-A1- 2018 086 157
- US-A1- 2019 299 719

## Beschreibung

Die Erfindung betrifft einen Nutzfahrzeugreifen mit Seitenwänden und einem Laufstreifen mit schulterseitigen Profilrippen, welche durch Querrillen voneinander getrennte schulterseitige Profilblöcke mit jeweils einer in Richtung zur anschließenden Seitenwand verlaufenden Flankenfläche aufweisen, wobei auf zumindest einer Seitenwand ein an die schulterseitigen Profilblöcke anschließender, in Umfangsrichtung umlaufender, gegenüber dem Niveau der Seitenwand erhabener Flankenschutz aus einer Vielzahl von aufeinanderfolgenden Erhebungen ausgebildet ist, wobei jede Erhebung an die Flankenfläche eines schulterseitigen Profilblockes anschließt und zwischen ihrer Außenfläche und der jeweiligen Seitenwand verlaufende Begrenzungsflächen aufweist.

Auf Seitenwänden von Nutzfahrzeugreifen ausgebildeter Flankenschutz schützt die Seitenwandbereiche sowie die "Off-Shoulder-Bereiche" des Laufstreifens vor Beschädigungen, wie Risse, Schnitte oder verstärktem Abrieb, welche bzw. welcher beispielsweise bei Bordsteinkontakt oder beim Fahren auf unbefestigten Straßen auftreten können bzw. kann.

Ein Fahrzeugluftreifen der eingangs genannten Art ist beispielsweise aus der US 2018/0086157 A1 bekannt. Der Reifen weist Seitenwände und einem Laufstreifen mit schulterseitigen Profilrippen auf, welche durch Querrillen voneinander getrennte schulterseitige Profilblöcke mit jeweils einer in Richtung zur anschließenden Seitenwand verlaufenden Flankenfläche aufweisen. An den Seitenwänden ist jeweils ein an die jeweiligen schulterseitigen Profilblöcke anschließender, in Umfangsrichtung umlaufender Flankenschutz aus einer Vielzahl von aufeinanderfolgenden Erhebungen ausgebildet. Jede Erhebung schließt an die Flankenfläche eines schulterseitigen Profilblocks an. Die Erhebungen sind, im Querschnitt betrachtet, flach trapezförmig ausgeführt. Vorzugsweise sind die Erhebungen über rippenförmige Stege miteinander verbunden. Dieser Reifen soll sich zum Fahren auf matschigem oder steinigem Untergrund gut eigenen.

Weitere Fahrzeugluftreifen, welche an den Seitenwänden jeweils einen Flankenschutz aus Erhebungen aufweisen, sind aus der EP 3 219 516 A1, der EP 3 533 639 A1, der US 2019/0299719 A1, der US 2017/0174007 A1, der US 2018/0065422 A1 und der JP 2004 291 937 A bekannt. JP2000280711 offenbart einen Nutzfahrzeugreifen mit keilförmigen, im Reifenquerschnitt dreieckigen Erhebungen, wobei jede keilförige Erhebung eine im Reifenquerschnitt knickfrei in die Flankenfläche des Profilblocks übergehende Erhebung aufweist.

Es ist ferner ein Nutzfahrzeugreifen (Stand Oktober 2019) unter der Bezeichnung *Conti HDC* 3 bekannt und erhältlich, welcher auf jeder Seitenwand eine über den Umfang der Seitenwand umlaufende Flankenrippe mit einer in Umfangsrichtung umlaufenden Kante aufweist. Die eher massiv ausgeführte Flankenrippe bietet vor allem einen guten Schutz vor Beschädigungen.

Der Erfindung liegt die Aufgabe zugrunde, bei einem Nutzfahrzeugreifen eingangs genannter Art einen Flankenschutz derart zu gestalten, dass bei gutem Schutz vor Beschädigungen zusätzlich auch Rissbildungen zuverlässig vermieden werden können.

Gelöst wird die gestellte Aufgabe erfindungsgemäß durch einen Nutzfahrzeugreifen mit einem Flankenschutz gemäß Anspruch 1.

Der erfindungsgemäß vorgesehene Flankenschutz besteht daher aus einzelnen keilförmigen Erhebungen, welche im Vergleich zu den bisher üblichen umlaufenden Flankenrippen weniger Gummimaterial benötigen, deutlich stabiler sind und durch den knickfreien Übergang ihrer Außenflächen in die schulterseitige Flankenflächen der Profilböcke nicht oder kaum zu Rissbildung neigen. Die Begrenzungsflächen sind für die Stabilität der Erhebungen von Vorteil.

Von besonderem Vorteil ist eine Ausführung, bei welcher jede keilförmige Erhebung an die Flankenfläche über deren in Umfangsrichtung ermittelte Länge anschließt.

Gemäß einer bevorzugten Ausführung weist jede keilförmige Erhebung, im Reifenquerschnitt betrachtet, eine am Niveau der Seitenwand und in radialer Richtung ermittelte maximale Breite von 3,0 mm bis 7,0 mm, insbesondere von 4,0 mm bis 5,0 mm, auf. Ein derartiger Flankenschutz benötigt nur wenig Gummimaterial.

Dabei es ist ferner bevorzugt, wenn jede keilförmige Erhebung eine maximale Stärke von 1,0 mm bis 3,0 mm, insbesondere von 1,5 mm bis 2,5 mm, aufweist.

Die Gefahr von Rissbildung ist zusätzlich reduziert, wenn die Außenfläche jeder keilförmigen Erhebung, im Reifenquerschnitt betrachtet, konkav, also nach innen durchgehend bogenförmig, insbesondere kreisbogenförmig, gekrümmt ist.

Eine weitere bevorzugte Ausführung, welche wenig Gummimaterial benötigt, ist dadurch gekennzeichnet, dass jede keilförmige Erhebung, betrachtet bei Sicht auf die Seitenwand, eine gleichschenkelig trapezartige Form aufweist, wobei sich die längere Grundseite des Trapezes am Anschluss der Außenfläche der Erhebung zur Flankenfläche des schulterseitigen Profilblockes befindet.

Bei dieser Ausführung hat es sich als besonders vorteilhaft herausgestellt, wenn jede keilförmige Erhebung an der kürzeren Grundseite des Trapezes eine in Umfangsrichtung ermittelte Länge aufweist, welche 40% bis 70%, insbesondere von 50% bis 60%, der in Umfangsrichtung ermittelten Länge der Flankenfläche des schulterseitigen Profilblockes beträgt.

Bevorzugt ist an jeder Seitenwand ein Flankenschutz aus einer Vielzahl von keilförmigen Erhebungen ausgebildet.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht eines Abschnittes eines Schulterbereiches eines Nutzfahrzeugreifens mit einer Ausführungsvariante der Erfindung,
Fig. 2 eine weitere Ansicht auf einen Teil des Abschnittes aus Fig. 1,
Fig. 3 eine vergrößerte Draufsicht auf eine im Schulterbereich verlaufende Querrille,
Fig. 3a einen Schnitt entlang der Linie IIIa-IIIa der Fig. 3,
Fig. 3b einen Schnitt entlang der Linie IIIb-IIIb der Fig. 3 und
Fig. 3c einen Schnitt entlang der Linie IIIc-IIIc der Fig. 3.

Gemäß der Erfindung ausgeführte Nutzfahrzeugreifen sind insbesondere LKW-Reifen in Radialbauart.

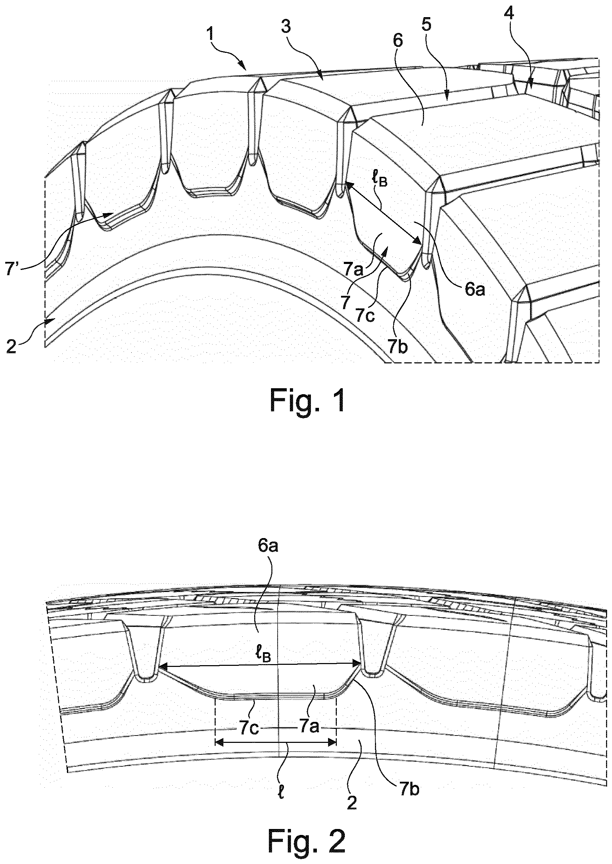

In Fig. 1 sind von einem Nutzfahrzeugreifen ein schulterseitiger Teilbereich eines Laufstreifens 1 und ein Umfangsabschnitt einer Seitenwand 2 gezeigt. Der Laufstreifen 1 weist an jeder Reifenschulter eine in Umfangsrichtung umlaufende schulterseitige Profilrippe 3 auf, welche laufstreifeninnenseitig durch eine Umfangsrille 4 begrenzt ist. Zwischen den schulterseitigen Profilrippen 3 befindet sich ein profilierter, mittlerer Laufstreifenbereich, welcher bei einer bevorzugten Ausführung weitere Profilrippen aufweist.

Jede schulterseitige Profilrippe 3 ist durch insbesondere in bekannter Weise ausgeführte, laufstreifenaußenseitig austretende Querrillen 5 in im Wesentlichen quaderförmige, Profilblöcke 6 gegliedert. Jeder Profilblock 6 weist außerhalb der Bodenaufstandsfläche eine schulterseitige Flankenfläche 6a auf, welche zwischen einander benachbarten Querrillen 5 in Richtung zur Seitenwand 2 verläuft. Die Flankenfläche 6a weist - ermittelt an ihrem der Seitenwand 2 zugewandten Rand - in Umfangsrichtung eine Länge l_{B} auf, welche mit dem Abstand zwischen den Querrillen 5 korreliert.

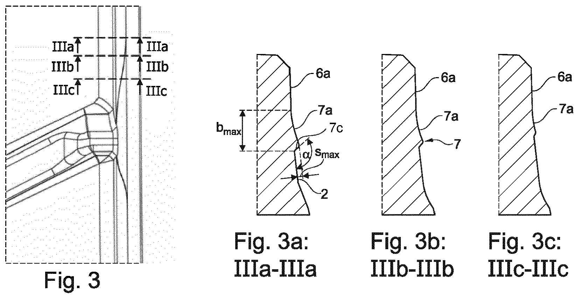

Auf der Seitenwand 2 befindet sich ein in Umfangsrichtung umlaufender Flankenschutz 7`, welcher aus einer Vielzahl von aufeinanderfolgenden, keilförmigen, im Reifenquerschnitt dreieckigen (Fig. 3a) Erhebungen 7 gebildet ist. Die keilförmigen Erhebungen 7 sind jeweils einem der schulterseitigen Profilblöcke 6 zugeordnet, wobei jede keilförmige Erhebung 7 über die gesamte Länge l_{B} an die schulterseitige Flankenfläche 6a des jeweiligen Profilblockes 6 anschließt.

Jede keilförmige Erhebung 7 weist eine im Reifenquerschnitt durchgehend leicht nach innen bogenförmig, insbesondere kreisbogenförmig, gekrümmte, mit der Flankenfläche 6a des Profilblockes 6 einheitliche Außenfläche 7a auf (Fig. 3a bis Fig. 3c). Dementsprechend geht die Außenfläche 7a, im Reifenquerschnitt betrachtet, knickfrei in die Flankenfläche 6a über. In Fig. 1 befindet sich bei der bezifferten keilförmigen Erhebung 7 der Anschluss der Außenfläche 7a an die entsprechende Flankenfläche 6a im Bereich der eingezeichneten Länge l_{B}.

Die keilförmige Erhebung 7 sowie deren Außenfläche 7a weisen beim gezeigten Ausführungsbeispiel, betrachtet bei Sicht auf die Seitenwand 2, eine gleichschenkelig trapezartige Form auf, wobei sich die längere Grundseite des zugehörigen Trapezes (=Basis des Trapezes) am Anschluss der Außenfläche 7a zur Flankenfläche 6a befindet (siehe auch Fig. 2).

Die keilförmige Erhebung 7 weist ferner zwei, jeweils an einen der Trapezschenkel des Trapezes ihrer Außenfläche 7a anschließende, zur Seitenwand 2 verlaufende dreieckige Seitenflächen 7b sowie eine an die kurze Grundseite des Trapezes ihrer Außenfläche 7a anschließende, zwischen den Seitenflächen 7b verlaufende und im Wesentlichen rechteckige Begrenzungsfläche 7c auf (siehe auch Fig. 2). Die dreieckigen Seitenflächen 7b und die rechteckige Begrenzungsfläche 7c schließen mit der Seitenwand 2 jeweils einen Winkel α (in Fig. 3a für Begrenzungsfläche 7c gezeigt) von 90° bis 130°, insbesondere von zumindest 100°, ein. Der Übergang der Seitenflächen 7b zur Begrenzungsfläche 7c sowie der Übergang der Außenfläche 7a zu den Seitenflächen 7b und zur Begrenzungsfläche 7c ist vorzugsweise gerundet ausgeführt. Entsprechend der Keilform der Erhebung 7 laufen die Seitenflächen 7b am gegenseitigen Anschluss der Außenfläche 7a und der Flankenfläche 6a aus.

Die Erhebung 7 weist infolge ihrer Keilform eine senkrecht gegenüber dem Niveau der Seitenwand 2 ermittelte Stärke auf, welche ausgehend vom gegenseitigen Anschluss der Außenfläche 7a und der Flankenfläche 6a in Richtung zur rechteckigen Begrenzungsfläche 7c kontinuierlich zunimmt. Die Erhebung 7 weist am Übergangsbereich der Außenfläche 7a zur rechteckigen Begrenzungsfläche 7c eine gegenüber dem lokal angrenzenden Niveau der Seitenwand 2 ermittelte maximale Stärke sₘₐₓ (Fig. 3a) von 1,0 mm bis 3,0 mm, insbesondere von 1,5 mm bis 2,5 mm, auf. Ferner weist die Erhebung 7, betrachtet im Reifenquerschnitt, eine mit der Höhe ihres Trapezes korrelierende, am Niveau der Seitenwand 2 ermittelte maximale Breite bₘₐₓ (Fig. 3a) von 3,0 mm bis 7,0 mm, insbesondere von 4,0 mm bis 5,0 mm, und eine ohne Berücksichtigung von etwaigen Rundungen an der Begrenzungsfläche 7c in Umfangsrichtung ermittelte Länge l (Fig. 2) von 40% bis 70%, insbesondere von 50% bis 60%, der bereits erwähnten Länge l_{B} der Flankenfläche 6a auf.

Die keilförmigen Erhebungen 7 bestehen zumindest Großteiles, insbesondere komplett, aus dem Gummimaterial der Seitenwand 2.

Die Erfindung ist auf das beschriebene Ausführungsbeispiel nicht beschränkt.

Insbesondere können die Erhebungen 7 eine von der gleichschenkeligen Trapezform abweichende Form aufweisen. Die Erhebungen 7 können bei Sicht auf die Seitenwand 2 betrachtet insbesondere eine asymmetrische Trapezform oder die Form eines Rechteckes aufweisen. Bevorzugter Weise befindet sich auf jeder Seitenwand ein aus Erhebungen 7 gebildeter Flankenschutz.

### Bezugsziffernliste

- 1: Laufstreifen
- 2: Seitenwand
- 3: schulterseitige Profilrippe
- 4: schulterseitige Umfangsrille
- 5: Querrille
- 6: schulterseitiger Profilblock
- 6a: schulterseitige Flankenfläche
- 7: Erhebung
- 7a: Außenfläche
- 7b: Seitenfläche
- 7c: Begrenzungsfläche
- 7': Flankenschutz
- bₘₐₓ: maximale Breite
- l, l_{B}: Länge
- sₘₐₓ: maximale Stärke
- α: Winkel

## Patentansprüche

1. Nutzfahrzeugreifen mit Seitenwänden (2) und einem Laufstreifen (1) mit schulterseitigen Profilrippen (3), welche durch Querrillen (5) voneinander getrennte schulterseitige Profilblöcke (6) mit jeweils einer in Richtung zur anschließenden Seitenwand (2) verlaufenden Flankenfläche (6a) aufweisen, wobei auf zumindest einer Seitenwand (2) ein an die schulterseitigen Profilblöcke (6) anschließender, in Umfangsrichtung umlaufender, gegenüber dem Niveau der Seitenwand (2) erhabener Flankenschutz (7') aus einer Vielzahl von aufeinanderfolgenden Erhebungen (7) ausgebildet ist, wobei jede Erhebung (7) an die Flankenfläche (6a) eines schulterseitigen Profilblockes (6) anschließt und zwischen ihrer Außenfläche (7a) und der jeweiligen Seitenwand (2) verlaufende Begrenzungsflächen (7b, 7c) aufweist,
wobei die Erhebungen (7) keilförmig und im Reifenquerschnitt dreieckig sind,
wobei jede keilförmige Erhebung (7) eine im Reifenquerschnitt knickfrei in die Flankenfläche (6a) des Profilblockes (6) übergehende Außenfläche (7a) aufweist,
wobei jede keilförmige Erhebung (7) eine senkrecht gegenüber dem Niveau der Seitenwand (2) ermittelte Stärke aufweist, welche, im Reifenquerschnitt betrachtet, ausgehend von der Flankenfläche (6a) des schulterseitigen Profilblockes (6) über die Erstreckung der Außenfläche (7a) in Richtung Seitenwand (2) zunimmt,
**dadurch gekennzeichnet, dass** die Begrenzungsflächen (7b, 7c) jeder Erhebung (7) mit der Seitenwand (2) einen Winkel (α) von 90° bis 130°, insbesondere von zumindest 100°, einschließen.

2. Nutzfahrzeugreifen nach Anspruch 1, **dadurch gekennzeichnet, dass** jede keilförmige Erhebung (7) an die Flankenfläche (6a) über deren in Umfangsrichtung ermittelte Länge (l_{b}) anschließt.

3. Nutzfahrzeugreifen nach Anspruch 1 oder 2, **dadurch gekennzeichnet, dass** jede keilförmige Erhebung (7), im Reifenquerschnitt betrachtet, eine am Niveau der Seitenwand (2) und in radialer Richtung ermittelte maximale Breite (bₘₐₓ) von 3,0 mm bis 7,0 mm, insbesondere von 4,0 mm bis 5,0 mm, aufweist.

4. Nutzfahrzeugreifen nach einem der Ansprüche 1 bis 3, **dadurch gekennzeichnet, dass** jede keilförmige Erhebung (7) eine maximale Stärke (sₘₐₓ) von 1,0 mm bis 3,0 mm, insbesondere von 1,5 mm bis 2,5 mm, aufweist.

5. Nutzfahrzeugreifen nach einem der Ansprüche 1 bis 4, **dadurch gekennzeichnet, dass** die Außenfläche (7a) jeder keilförmigen Erhebung (7), im Reifenquerschnitt betrachtet, nach innen durchgehend bogenförmig, insbesondere kreisbogenförmig, gekrümmt ist.

6. Nutzfahrzeugreifen nach einem der Ansprüche 1 bis 5, **dadurch gekennzeichnet, dass** jede keilförmige Erhebung (7), betrachtet bei Sicht auf die Seitenwand (2), eine gleichschenkelig trapezartige Form aufweist, wobei sich die längere Grundseite des Trapezes am Anschluss der Außenfläche (7a) der Erhebung (7) zur Flankenfläche (6a) des schulterseitigen Profilblockes (6) befindet.

7. Nutzfahrzeugreifen nach Anspruch 6, **dadurch gekennzeichnet, dass** jede keilförmige Erhebung (7) an der kürzeren Grundseite des Trapezes eine in Umfangsrichtung ermittelte Länge (l) aufweist, welche 40% bis 70%, insbesondere von 50% bis 60%, der in Umfangsrichtung ermittelten Länge (l_{B}) der Flankenfläche (6a) des schulterseitigen Profilblockes (6) beträgt.

8. Nutzfahrzeugreifen nach einem der Ansprüche 1 bis 7, **dadurch gekennzeichnet, dass** an jeder Seitenwand (2) ein Flankenschutz (7') aus einer Vielzahl von keilförmigen Erhebungen (7) ausgebildet ist.

## Claims

1. Utility-vehicle tyre having side walls (2) and having a tread (1) with shoulder-side profile ribs (3), which shoulder-side profile ribs have shoulder-side profile blocks (6) separated from one another by transverse channels (5) and having in each case one flank surface (6a) which extends in the direction of the adjoining side wall (2), wherein, on at least one side wall (2), there is formed a flank guard (7') adjoining the shoulder-side profile blocks (6) and running around in a circumferential direction, said flank guard being elevated in relation to the level of the side wall (2) and being composed of a multiplicity of successive elevations (7), wherein each elevation (7) adjoins the flank surface (6a) of a shoulder-side profile block (6) and has delimiting surfaces (7b, 7c) which extend between its outer surface (7a) and the respective side wall (2),
wherein the elevations (7) are wedge-shaped and are triangular in the tyre cross section, wherein each wedge-shaped elevation (7) has an outer surface (7a) which, in the tyre cross section, transitions without a kink into the flank surface (6a) of the profile block (6),
wherein each wedge-shaped elevation (7) has a thickness measured perpendicularly to the level of the side wall (2), which thickness, as viewed in the tyre cross section, increases over the extent of the outer surface (7a) in the direction of the side wall (2) proceeding from the flank surface (6a) of the shoulder-side profile block (6), **characterized in that** the delimiting surfaces (7b, 7c) of each elevation (7) include an angle (α) of 90° to 130°, in particular of at least 100°, with the side wall (2).

2. Utility vehicle tyre according to Claim 1, **characterized in that** each wedge-shaped elevation (7) adjoins the flank surface (6a) over its length (1_{b}) measured in a circumferential direction.

3. Utility vehicle tyre according to Claim 1 or 2, **characterized in that**, as viewed in the tyre cross section, each wedge-shaped elevation (7) has a maximum width (bₘₐₓ) of 3.0 mm to 7.0 mm, in particular of 4.0 mm to 5.0 mm, measured at the level of the side wall (2) and in a radial direction.

4. Utility vehicle tyre according to one of Claims 1 to 3, **characterized in that** each wedge-shaped elevation (7) has a maximum thickness (sₘₐₓ) of 1.0 mm to 3.0 mm, in particular of 1.5 mm to 2.5 mm.

5. Utility vehicle tyre according to one of Claims 1 to 4, **characterized in that**, as viewed in the tyre cross section, the outer surface (7a) of each wedge-shaped elevation (7) is inwardly continuously curved in the shape of an arc, in particular in the shape of a circular arc.

6. Utility vehicle tyre according to one of Claims 1 to 5, **characterized in that** each wedge-shaped elevation (7) has the shape of an isosceles trapezium as seen in a view directed towards the side wall (2), wherein the longer base side of the trapezium is situated at the connection of the outer surface (7a) of the elevation (7) to the flank surface (6a) of the shoulder-side profile block (6).

7. Utility vehicle tyre according to Claim 6, **characterized in that**, at the shorter base side of the trapezium, each wedge-shaped elevation (7) has a length (1) measured in the circumferential direction which is 40% to 70%, in particular 50% to 60%, of the length (1_{B}) of the flank surface (6a) of the shoulder-side profile block (6) measured in the circumferential direction.

8. Utility vehicle tyre according to one of Claims 1 to 7, **characterized in that** a flank guard (7') composed of a multiplicity of wedge-shaped elevations (7) is formed on each side wall (2).

## Revendications

1. Pneumatique pour véhicule utilitaire avec des parois latérales (2) et une bande de roulement (1) ayant des nervures profilées (3) côté épaulement, qui présentent des blocs profilés (6) côté épaulement séparés les uns des autres par des rainures transversales (5), chacun présentant une surface de flanc (6a) s'étendant en direction de la paroi latérale (2) adjacente, une protection de flanc (7'), constituée d'une pluralité de saillies en saillie (7) successives, étant formée sur au moins une paroi latérale (2), se raccordant aux blocs profilés (6) du côté de l'épaulement, s'étendant dans la direction périphérique et étant surélevée par rapport au niveau de la paroi latérale (2), chaque saillie (7) se raccordant à la surface de flanc (6a) d'un bloc profilé (6) du côté de l'épaulement et présentant des surfaces de délimitation (7b, 7c) s'étendant entre sa surface extérieure (7a) et la paroi latérale (2) respective,
les saillies (7) étant en forme de coin et triangulaires en section transversale du pneumatique, chaque saillie (7) en forme de coin présentant une surface extérieure (7a) se raccordant à la surface de flanc (6a) du bloc profilé (6), sans plis en section transversale du pneumatique,
chaque saillie (7) en forme de coin présentant une épaisseur déterminée perpendiculairement au niveau de la paroi latérale (2), laquelle, vue en section transversale du pneumatique, augmente à partir de la surface de flanc (6a) du bloc profilé (6) côté épaulement sur l'étendue de la surface extérieure (7a) en direction de la paroi latérale (2), **caractérisé en ce que** les surfaces de délimitation (7b, 7c) de chaque saillie (7) forment avec la paroi latérale (2) un angle (α) allant de 90° à 130°, en particulier d'au moins 100°.

2. Pneumatique pour véhicule utilitaire selon la revendication 1, **caractérisé en ce que** chaque saillie (7) en forme de coin se raccorde à la surface de flanc (6a) sur sa longueur (1b) déterminée dans la direction circonférentielle.

3. Pneumatique pour véhicule utilitaire selon la revendication 1 ou la revendication 2, **caractérisé en ce que** chaque saillie (7) en forme de coin, vue en section transversale du pneumatique, présente, au niveau de la paroi latérale (2) et dans la direction radiale, une largeur maximale (bₘₐₓ) déterminée allant de 3,0 mm à 7,0 mm, en particulier de 4,0 mm à 5,0 mm.

4. Pneumatique pour véhicule utilitaire selon l'une des revendications 1 à 3, **caractérisé en ce que** chaque saillie (7) en forme de coin présente une épaisseur maximale (sₘₐₓ) allant de 1,0 mm à 3,0 mm, en particulier de 1,5 mm à 2,5 mm.

5. Pneumatique pour véhicule utilitaire selon l'une des revendications 1 à 4, **caractérisé en ce que** la surface extérieure (7a) de chaque saillie (7) en forme de coin, vue en section transversale du pneumatique, est incurvée vers l'intérieur de manière continue, selon une forme arquée, en particulier selon une forme en arc de cercle.

6. Pneumatique pour véhicule utilitaire selon l'une des revendications 1 à 5, **caractérisé en ce que** chaque saillie (7) en forme de coin présente, vue sur la paroi latérale (2), une forme de trapèze isocèle, le côté de base le plus long du trapèze se trouvant au niveau du raccordement de la surface extérieure (7a) de la saillie (7) à la surface de flanc (6a) du bloc profilé (6) côté épaulement.

7. Pneumatique pour véhicule utilitaire selon la revendication 6, **caractérisé en ce que** chaque saillie (7) en forme de coin présente, sur le côté de base plus court du trapèze, une longueur (1) déterminée dans la direction circonférentielle qui représente 40% à 70%, en particulier de 50% à 60%, de la longueur (1_{B}) déterminée dans la direction circonférentielle de la surface de flanc (6a) du bloc profilé (6) côté épaulement.

8. Pneumatique pour véhicule utilitaire selon l'une des revendications 1 à 7, **caractérisé en ce qu'**une protection de flanc (7') constituée d'une pluralité de saillie (7) en forme de coin est formée sur chaque paroi latérale (2).
